# NEUE EUROPÄISCHE PATENTSCHRIFT

(11) **EP 0 088 911 B2**
(45) Veröffentlichungstag und Bekanntmachung des Hinweises auf die Entscheidung über den Einspruch: **21.04.1993**
(45) Hinweis auf die Patenterteilung: 06.08.1986
(21) Anmeldenummer: 83101687.8
(22) Anmeldetag: 22.02.1983
(51) Int. Cl.: B60T 8/18, B60T 13/10

(54) **Zweikreis-Druckmittelbremsanlage**
Twin circuit pressure braking system
Système de freinage à deux circuits avec fluide sous pression

(30) Priorität: 17.03.1982 DE 3209592
(43) Veröffentlichungstag der Anmeldung: 21.09.1983
(73) Patentinhaber: ROBERT BOSCH GMBH, 70442 Stuttgart (DE)
(72) Erfinder: Grauel, Ingolf, Dipl.-Ing., D-7143 Vaihingen (DE); Kulke, Günter, D-7300 Esslingen (DE); Müller, Egbert, Dr.-Ing., D-7147 Hochdorf (DE); Stumpe, Werner, D-7014 Kornwestheim (DE)

(56) Entgegenhaltungen:
- EP-A- 0 033 379
- EP-A- 0 046 166
- DE-A- 1 555 203
- DE-A- 1 580 364
- DE-A- 1 949 364
- DE-A- 2 457 543
- DE-A- 2 457 793
- DE-A- 2 517 907
- DE-A- 2 931 360
- DE-B- 2 548 973
- FR-A- 2 241 431
- FR-A- 2 259 730
- FR-A- 2 293 343
- GB-A- 1 153 333
- WABCO Westinghouse-Druckschrift "Equipements pneumatiques de freinage", 1975, S. 8 und 12
- WABCO-Druckschrift 473017, Januar 1974
- Bendix Westinghouse-Druckschrift "An Introduction to Air Brakes" 1976, S. 15

## Beschreibung

Die Erfindung geht aus von einer Zweikreis-Druckmittelbremsanlage nach der Gattung des Hauptanspruchs. Eine derartige Bremsanlage ist bekannt (DE-A-2 457 793). Das dort verwendete Zweikreis-Steuerventil wirkt mit einem Steuerkreis auf ein einem Bremskreis zugeordnetes Relaisventil, mit seinem zweiten Steuerkreis auf ein Relaisventil ein, das einem zweiten Bremskreis zugeordnet und unabhängig vom Steuerkreis mit Signalen ansteuerbar ist, die von einem lastabhängigen Bremskraftregler herangeführt sind. Diese Bremsanlage ist insofern nachteilig, als bei Ausfall eines Steuerkreises der zugehörige Bremskreis unwirksam wird.

Der Erfindung liegt die Aufgabe zugrunde, diesen Nachteil zu beseitigen.

Durch die Zweikreis-Druckmittelbremsanlage nach dem Hauptanspruch ist gewährleistet, daß bei Ausfall des Primär-Steuerkreises der Sekundär-Steuerkreis eine Bremskraft an allen Bremszylindern sicherstellt. Zugleich wird erreicht, daß auf einfache Weise eine gleichzeitige Zumessung des Bremsdrucks an allen Bremszylindern erfolgt, d. h. eine Phasenverschiebung im Ansprechen der Bremskreise mit Sicherheit vermieden ist.

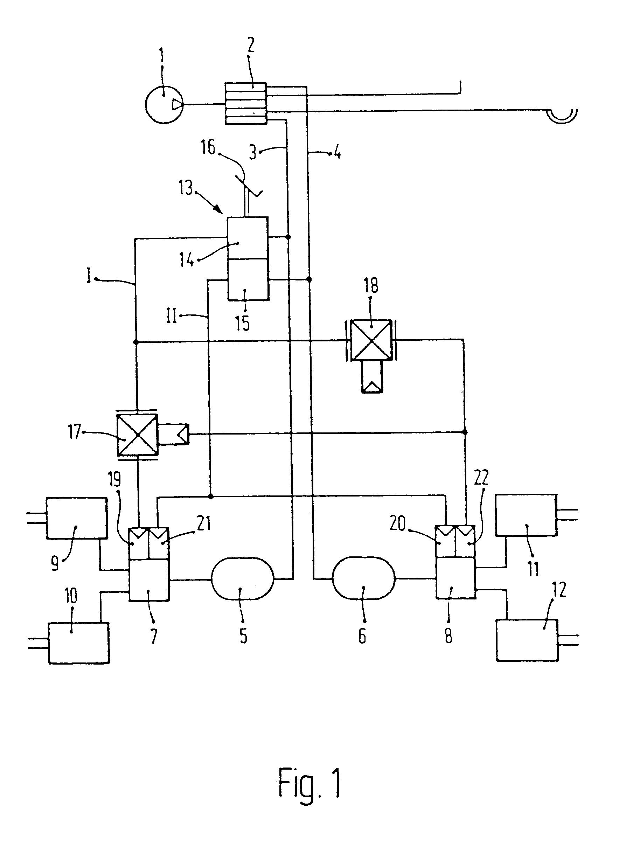

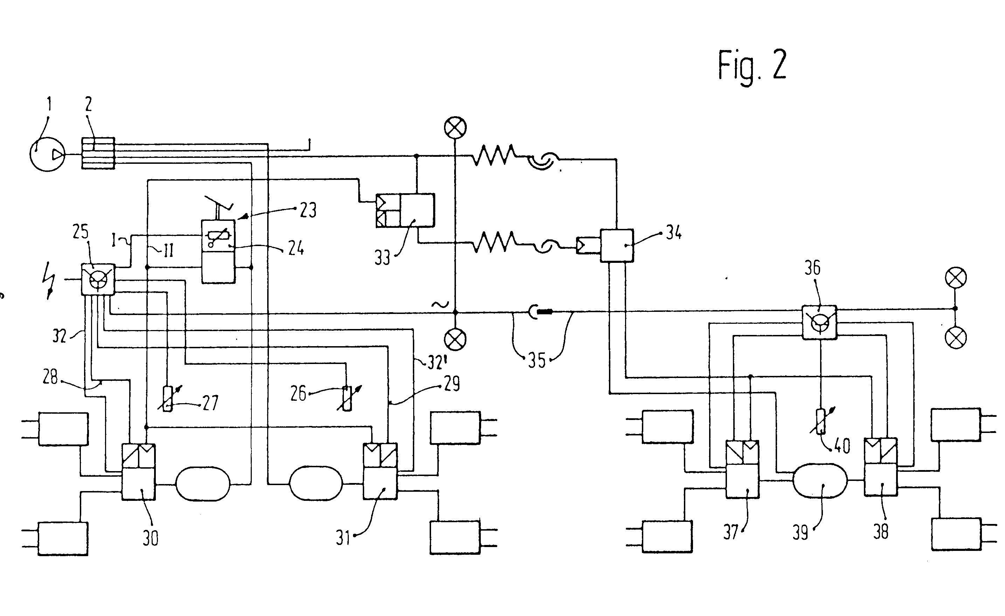

Zwei Ausführungsbeispiele sind in derZeichnung dargestellt und in der nachfolgenden Beschreibung näher erläutert. Es zeigen: Figur 1 eine Bremsanlage mit Druckluft-Steuerkreis und Figur 2 eine Bremsanlage mit Elektrik-Druckluft-Steuerkreis

### Beschreibung der Ausführungsbeispiele

Eine Zweikreis-Druckluftbremsanlage wird von einem Kompressor 1 überein diesem nachgeschaltetes Vierkreis-Schutzventil 2 mit Druckluft versorgt, und in zwei über Vorratsleitungen 3 und 4 beschickte Zugwagen-Vorratsbehälter 5 und 6 wird die auf dem Zugwagen benötigte Druckluft gespeichert. Jedem Vorratsbehälter 5 bzw. 6 ist ein Relaisventil 7 bzw. 8 nachgeschaltet, und an jedes Relaisventil 7 bzw. 8 sind zwei Bremszylinder 9 und 10 bzw. 11 und 12 einer Vorderachse bzw. einer Hinterachse angeschlossen. An den Vorratsleitungen 3 und 4 ist auch eine Verbindung zu einem Zweikreis-Bremsventil 13 geschaffen, das mit zwei Einzelventilen 14 und 15 bestückt ist. Das einem Pedal 16 benachbarte Einzelventil 14 überwacht einen Primär-Steuerkreis I, und das andere Einzelventil 15 überwacht einen Sekundär-Steuerkreis II. Im Primär-Steuerkreis I liegen verschiedene Steuerglieder 17 und 18, und zwar ein Bremsminderer 17 und ein lastabhängiger Bremskraftregler 18. Über jedes Steuerglied 17 bzw. 18 wird ein Steuerteil 19 bzw. 22 angesteuert, der an einem der beiden Relaisventile 7 bzw. 8 sitzt und mit dem das Relaisventil 7 bzw. 8 umsteuerbar ist.

Jedes Relaisventil 7 bzw. 8 hat aber noch einen zweiten Steuerteil 21 bzw. 20, der parallel zum ersten angeordnet ist und der über das zweite Einzelventil 15 unmittelbar, d.h. ohne dazwischenliegende Steuerglieder ansteuerbar ist. Wie zu erkennen ist, wird auf diese Weise eine übergreifende Steuerung erreicht, d.h. der Primär-Steuerkreis 1 wie auch der Sekundär-Steuerkreis 11 betätigen sowohl die Vorderachsbremszylinder 9 und 10 wie auch die Hinterachsbremszylinder 11 und 12.

Der Primär-Steuerkreis wird durch eine besondere Ausbildung des Zweikreis-Bremsventils 13 jeweils bevorzugt versorgt, so dass bei intakter Bremsanlage der Primär-Steuerkreis 1 die Führung übernimmt und die Bremsen zur Wirkung kommen lässt. Der Steuerkreis I gewährleistet eine schnelle Signalübertragung und die entsprechende Zumessung der Bremskräfte, die auch beispielsweise über Sensoren eingestellt und kontrolliert werden können. Bei Ausfall oder bei einem Fehler im Primär-Steuerkreis I sorgt der Sekundär-Steuerkreis II für eine Mindestbremswirkung der Hilfsbremse.

Die Figur 2 zeigt eine Zweikreis-Druckluftbremsanlage mit Elektrik. Dabei tragen die der Ausführung nach der Figur 1 entsprechenden Teiledie gleichen Bezugszahlen.

Hier ist ein Zweikreis-Bremsventil 23 verwendet, das im Primär-Steuerkreis I einen elektrischen Stromgeber 24 aufweist. Demzufolge ist der gesamte Primär-Steuerkreis I elektrisch ausgebildet mit einem elektronischen Regler 25, der mit Signalen von Lastsensoren 26 und Bremskraftsensoren 27 beschickbar ist. Über Steuerleitungen 28 und 29 ist der Regler 25 sowohl an ein Relaisventil 30 für die Vorderachse als auch an ein Relaisventil 31 für die Hinterachse angeschlossen. Dazu kommt noch je eine Leitung 32 bzw. 32', die zu nicht näher dargestellten Drucksensoren führt, die in die Relaisventile 30 und 31 integriert sind.

Über ein Anhänger-Steuergerät 33, ein Anhänger-Bremsgerät 34 und eine vom Regler 25 nach hinten geführte elektrische Leitung 35 ist an das beschriebene Bremssystem auch noch, ein Anhänger-Bremssystem mit einem eigenen elektronischen Regler 36 und zwei Relaisventilen 37 und 38 sowie mit einem Anhänger-Vorratsbehälter 39 angeschlossen. Jedes Relaisventil 37 bzw. 38 ist wieder zweikreisig und übergreifend ansteuerbar, geradeso wie auf dem Zugwagen. Auch der elektronische Anhänger-Regler 36 ist zum Signalempfang von Last- oder Bremskraftsensoren 40 ausgerüstet, die aber nur für einen Primär-Steuerkreis bestimmt sind.

Bei dieser Bauart sorgt die elektrische Übertragung der Signale für ein besonders schnelles Ansprechen der Bremse. Der elektrische Primär-Steuerkreis I übernimmt die Führung, sorgt für schnelle Signalübertragung und für die entsprechende Zumessung der Bremskräfte, die über die Sensoren eingestellt und kontrolliert werden.

## Patentansprüche

1. Zweikreis-Druckmittelbremsanlage mit zweikreisiger Druckmittel-Speicherung mit einem Zweikreis-Steuerventil (13; 23) für die Ansteuerung eines ersten Steuerkreises und eines zweiten Steuerkreises sowie mit je einem, den Bremszylindern (9, 10, 11,12) eines Bremskreisesvorgeordneten Relaisventil (7, 8; 30, 31), das von dem Zweikreis-Steuerventil (13; 23) ansteuerbar ist und einen dem am Relaisventil anstehenden Bremssteuerdruck entsprechenden Bremsdruck vom Druckmittelspeicher (5, 6) zu den Bremszylindern durchschaltet, sowie mit zur optimalen Bremskraftanpassung notwendigen Steuergliedern (17, 18; 26, 27), dadurch gekennzeichnet, daß das Zweikreis-Steuerventil (13; 23) für die bevorzugte Ansteuerung eines Primär-Steuerkreises (I) und die nachgeordnete Ansteuerung eines Sekundär-Steuerkreises (11) ausgebildet ist, daß der Primär-Steuerkreis (I) alle der Bremskraftanpassung dienenden Steuerglieder(17, 18; 26, 27) enthält, während der Sekundär-Steuerkreis (11) ein steuergliedloser Hilfskreis ist, daß jeder Steuerkreis (I, II) über beide, zweikreisig ansteuerbaren Relaisventile (7, 8; 30, 31) zu jeweils allen Bremszylindern (9, 10, 11, 12) geführt ist, daß jedes Relaisventil (7, 8; 30, 31) die Schnittstelle beider Steuerkreise (I, 11) bildet und von dem Zweikreis-Steuerventil (13; 23) in beiden Steuerkreisen mit Bremssteuerdruck oder im Sekundär-Steuerkreis (11) mit Bremssteuerdruck und im Primär-Steuerkreis (I) mit einem elektrischen Signal ansteuerbar ist.

2. Zweikreis-Druckmittelbremsanlage nach Anspruch 1, dadurch gekennzeichnet, daß je ein Relaisventil (7, 8; 30, 31) den Bremszylindern (9, 10 bzw. 11, 12) einer Fahrzeugachse (Vorder- bzw. Hinterachse) vorgeordnet ist.

3. Zweikreis-Druckmittelbremsanlage nach Anspruch 1 oder 2, dadurch gekennzeichnet, daß der Primär-Steuerkreis (I) in an sich bekannter Weise einen elektronischen Regler (25, 36) mit Signaleingabe von Last und Bremskraft aufweist und daß das Relaisventil (30, 31, 37, 38) auch für eine elektrische Signalabgabe ausgerüstet ist.

## Claims

1. Dual-circuit pressure-medium brake system with dual-circuit pressure-medium accumulation with a dual-circuit control valve (13; 23) for the operation of a first control circuit and a second control circuit as well as with a relay valve (7, 8; 30, 31) in each case arranged upstream of the brake cylinders (9, 10, 11, 12) of a brake circuit, which relay valve can be operated by the dual-circuit control valve (13; 23) and switches through a brake pressure, corresponding to the brake control pressure at the relay valve, from the pressure-medium accumulator (5,6) to the brake cylinders, as well as with control elements (17, 18; 26, 27) necessary for optimum braking force adaptation, characterised in that the dual-circuit control valve (13; 23) is designed for the preferred operation of a primary control circuit (I) and the subordinate operation of a secondary control circuit (II), in that the primary control circuit (I) includes all the control elements (17, 18; 26, 27) serving for braking force adaptation, whereas the secondary control circuit (II) is an auxiliary circuit without control elements, in that each control circuit (I, II) is led via the two dual-circuit operable relay valves (7, 8; 30, 31) to all brake cylinders (9, 10, 11, 12) in each case, in that each relay valve (7, 8; 30, 31) forms the interface of the two control circuits (I, II) and can be operated by the dual-circuit control valve (13; 23) in both control circuits by brake control pressure or in the secondary control circuit (II) by brake control pressure and in the primary control circuit (I) by an electrical signal.

2. Dual-circuit pressure-medium brake system according to Claim 1, characterised in that a relay valve (7, 8; 30, 31) is in each case arranged upstream of the brake cylinders (9, 10 and 11, 12, respectively) of a vehicle axle (front and rear axle, respectively).

3. Dual-circuit pressure-medium brake system according to Claim 1 or 2, characterised in that the primary control circuit (I) in a way known per se has an electronic controller (25,36) with signal input of load and braking force, and in thatthe relay valve (30, 31, 37, 38) is also equipped for an electrical signal emission.

## Revendications

1. Installation de freinage à fluide sous pression à double circuit avec accumulation de fluide sous pression dans les deux circuits, et avec une vanne de commande à deux circuits (13; 23) pour la commande d'un premier circuit de commande et d'un second circuit de commande, ainsi qu'avec un distributeur-relais (7, 8; 30, 31) disposée en amont de chacun des cylindres de frein (9, 10, 11, 12) d'un circuit de freinage, ce distributeurà relais étant susceptible d'être commandée par la vanne de commande à double circuit (13, 23) et transmettant aux cylindres de frein à partir de l'accumulateur de fluide sous pression (5, 6) une pression de freinage correspondant à la pression de commande de freinage apparaissant sur la vanne-relais, ainsi qu'avec les organes de commande (17, 18; 26, 27) nécessaires pour une adaptation optimale de l'effort de freinage, installation caractérisée en ce que la vanne de commande à deux circuits (13; 23) est prévue pour la commande prioritaire d'un circuit de commande primaire (I) et la commande en second rang pour c elle d'un circuit de commande secondaire (II), en ce que le circuit de commande primaire (I) comprend tous les organes de commande (17, 18; 26, 27) servant à l'adaptation de l'effort de freinage, tandis que le circuit de commande secondaire (II) est un circuit auxiliaire sans organe de commande, en ce que chaque circuit de commande (I, II) est amené à respectivement tous les cylindres de frein (9, 10, 11, 12) par l'intermédiaire de deux distributeurs-relais (7, 8; 30, 31) susceptibles d'être commandées par les deux circuits, en ce que chaque distributeur-relais (7, 8; 30, 31) forme l'interface des deux circuits de commande (I, II) et est susceptible d'être commandée par la vanne de commande à deux circuits (13, 23) dans les deux circuits de commande, par la pression de commande de freinage ou bien dans le circuit de commande secondaire (II) par la pression de commande de freinage et dans le circuit de commande primaire (I) par un signal électrique.

2. Installation de freinage à fluide sous pression à deux circuits, selon la revendication 1, caractérisée en ce qu'un distributeur-relais (7, 8; 30, 31) est disposée en amont de chacun des cylindres de frein (9, 10 ou bien 11, 12) d'un essieu du véhicule (essieu avant ou bien essieu arrière).

3. Installation de freinage à fluide sous pression à deux circuits, selon la revendication 1 ou la revendication 2, caractérisée en ce que le circuit de commande primaire (I) connu en soi comporte un régulateur électronique (25, 36) avec introduction de signaux de charge et d'effort de freinage, et en ce que la distributeur-relais (30, 31, 37, 38) est également équipée pour délivrer un signal électrique.
